# EUROPEAN PATENT APPLICATION

(11) **EP 2 711 883 A1**
(43) Date of publication of application: **26.03.2014**
(21) Application number: 13184001.9
(22) Date of filing: 11.09.2013
(51) Int. Cl.: G06Q 10/10

(54) **Method and system for scheduling a communication session**

(30) Priority: 20.09.2012 US 201213623362
(71) Applicant: Mitel Networks Corporation, Ottawa, ON K2K 2W7 (CA)
(72) Inventor: Wodzinski, Vanessa, Mesa, AZ Arizona (US); Gaetano, Jr., Arthur, Chandler, AZ Arizona (US)
(74) Representative: Charlton, Steven

(57) **Abstract**

A system and method for scheduling a future collaborative communication session using a collaborative communication application are disclosed. The system and method allow one or more participants of a collaborative communication session to schedule a future communication session directly from a collaborative communication application. A calendar application, such as an enterprise calendar system, may be integrated with the communication application, such that future meetings can easily be scheduled using the communication application.

## Description

### Field of the Invention

The present disclosure generally relates to collaborative communication systems and methods. More particularly, the disclosure relates to systems and methods for conveniently scheduling upcoming collaborative communication sessions for multiple participants during a communication session.

### Background of the Invention

Collaborative communication sessions may include a variety of formats, such as a Unified Communication and Collaboration (UCC) session, which may integrate multiple forms of communication, such as voice (e.g., Internet Protocol (IP), Plain Old Telephone Service (POTS), mobile phone, Integrated Services Digital Network (ISDN)), chat or instant messaging, video conferencing, data sharing, and the like. Advantages of employing unified communication systems include allowing participants using a variety of forms of communication to communicate directly with one another using a unified interface.

During a collaborative communication session, it may be desirable to schedule a follow-up meeting or communication with one or more of the participants in the current communication session. To try to schedule the follow-up collaborative communication session, a participant typically must exit the communication session and use multiple applications to obtain participant contact information, participant schedule availability, and availability of the collaborative communication resources. Having to exit the collaborative communication application, and check participant and collaborative communication application system availability may be time consuming, cumbersome, and prone to error-thus making scheduling the next collaborative communication session during a collaborative communication difficult.

Therefore, improved systems and methods for scheduling collaborative communications are desired.

### Summary

According to one aspect of the present invention there is provided a collaborative communication system comprising:
a server;
a first device coupled to the server, the first device comprising a collaborative communication application; and
a second device coupled to the server;
wherein the collaborative communication application includes an integrated calendar feature, or employs a calendar widget, that checks participants' availability and desired system features' availability and schedules a future session based on the availability of the participants and the desired system features.

According to another aspect of the present invention there is provided a method of scheduling a collaborative communication session, the method comprising the steps of:
initiating a collaborative communication session between two or more participants;
selecting schedule a communication session using a collaborative communication application that includes an integrated calendar feature or that employs a calendar widget;
selecting communication session participants;
checking participant availability using the calendar feature or the calendar widget;
checking desired collaborative communication system features availability using the calendar feature or the calendar widget; and
sending an invitation to desired participants to participate in a future session.

According to one aspect of the present disclosure there is provided a method of scheduling a collaborative communication session, the method comprising the steps of:
initiating a collaborative communication session between two or more participants;
selecting schedule a follow-up communication session using a collaborative communication application that includes an integrated calendar feature or that employs a calendar widget;
displaying participants' calendar information;
selecting communication participants;
checking participant availability using the calendar feature or widget;
checking desired collaborative communication system features availability using the calendar feature or widget; and
sending an invitation to desired participants to participate in a follow up communication session.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 illustrates a communication system in accordance with various embodiments of the invention;
FIG. 2 illustrates a communication method in accordance with additional embodiments of the invention;
FIG. 3 illustrates a collaborative communication application with a scheduling/calendaring option in accordance with additional embodiments of the invention;
FIG. 4 illustrates a collaborative chat application with a scheduling/calendaring optionin accordance with additional embodiments of the invention;
FIG. 5 illustrates a calendar application in accordance with embodiments of the invention;
FIG. 6 illustrates integration of a calendar application with a chat session in accordance with further embodiments of the invention;
FIG. 7 illustrates a collaboration session after a participant has scheduled a follow-up communication; and
FIG. 8 illustrates a collaboration session after a participant has selected to check resource availability.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description of Exemplary Embodiments

The description of exemplary embodiments of the present invention provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features.

The disclosure provides a system and method for scheduling a future collaborative communication session or meeting during a current collaborative communication session. As set forth in more detail below, the system and method described herein allow participants to easily review the availability of participants, review availability of a collaboration system and/or features thereof, propose or generate a proposed next session time based on the availability of the desired participants, the availability of the communication system and/or desired features, and desired time until the next meeting, and schedule future collaboration sessions, using a collaborative communication application.

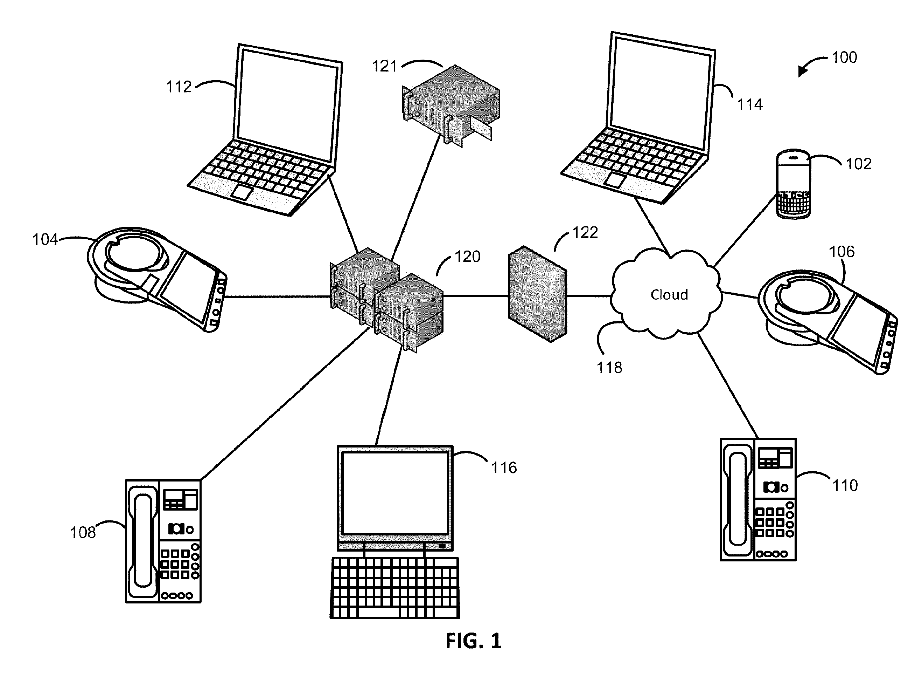

FIG. 1 illustrates an exemplary collaborative communication system 100 in accordance with various embodiments of the invention. System 100 includes one or more devices (e.g., phones, mobile devices, computers, and the like) coupled to a network, wherein at least one of the devices includes a collaborative communication application as described herein. In the illustrated example, system 100 includes a mobile device 102, collaboration devices 104, 106, telephones 108, 110, computers 112, 114, 116, a network or cloud 118, application server 120, and optionally a server 121 and/or firewall 122. Although illustrated with mobile device 102, collaboration devices 104, 106, telephones 108, 110, computers 112, 114, 116, network 118, and servers 120, 121, system 100 may include any suitable number of any suitable combination of two or more devices coupled to a network or server.

Mobile device 102 may be a smart phone, a computer (e.g., a laptop, desktop, tablet, or the like), or any other mobile device capable of audio and/or video wireless communication to cloud 118 (either direct or indirect wireless communication). Device 102 may include a collaborative communication application, such as UCC, which includes the calendaring/scheduling feature disclosed herein.

Collaboration appliances 104, 106 can be used to establish a video or audio communication session with other devices directly or indirectly connected to one or more appliances 104, 106. Exemplary collaboration appliances include the Mitel UC360™ Collaboration Point, available from Mitel Networks Corporation. Appliances 104, 106 may include a collaborative communication application, which includes the calendaring/scheduling feature as set forth herein.

Phones 108, 110 may include any suitable telephones. By way of examples, phones 108, 110 may be POTS phones, VoIP phones, both, or a combination thereof.

Computers 112-116 may include desktop, laptop, tablet, mobile, or any other form of computing device. Similar to the mobile devices, collaboration appliances, computers 112-116 may include a collaborative communication application, which includes a calendaring function as described herein.

Cloud 118 may include one or more of: a local area network (LAN), a wide area network, a personal area network, a campus area network, a metropolitan area network, a global area network, or the like. Components of cloud 118 may be coupled to devices 102-116 using an Ethernet connection, other wired connections, a WiFi interface, other wireless interfaces, or the like. In the illustrated example, cloud 118 is coupled to server 120. Cloud 118 and server 120 may be coupled to other networks and/or servers and/or to other devices typically coupled to networks. For example, as illustrated, server 120 may be coupled to server 121.

Although illustrated as a single server, server 120 may include any suitable server or servers, such as a collaboration server, a collaboration server and unified communications server, or a unified communications and collaboration server, each either with or without a private branch exchange. Similarly, server 121 may include any suitable server or servers, such as an email and/or calendaring server.

The collaborative communication application noted above supports multiple forms of communication using a variety of devices, such as the devices noted above in connection with system 100. The collaborative communication application may include a Unified Communication (UC) or UCC application, such as Mitel® Unified Communicator Advanced or Mitel Collaboration Advanced, which provides real-time access to everyone in an organization (or in an enterprise group), on or off the premises. The collaborative communication application described herein includes a calendar feature, which has access to participants' (e.g., participants belonging to the same enterprise network) calendars and/or includes a widget or plug-in to allow access to the participants' calendars and has access to collaborative communication resource availability (e.g., conference ports of server 120) to facilitate scheduling a follow-up meeting with the participants using desired collaborative communication resources/features (e.g., web, data, voice, video, or the like). The calendar information may reside on, for example, server 121-e.g. a calendaring application server. In accordance with exemplary aspects, participants' calendar information is automatically entered into the calendar feature upon initiation of a session or upon access by a participant of the calendar feature or when a participant selects to schedule a future session. Further, the collaborative communication application, in accordance with exemplary aspects, allows users to accept, reject, or propose alternative times for future meetings-all within the communication application or within a calendar application via a widget or plug-in. Without such an application, a user would have to exit the collaborative communication application and use a separate calendaring feature, which is cumbersome and time consuming, and such calendar feature may not provide information regarding collaboration device or system (e.g., UCC system) resource availability.

As set forth in more detail below, the calendar feature may automatically schedule or set a time for a follow-up meeting based on desired times of a session (e.g., business hours), availability of participants, availability of the collaborative communication resources or features, and predefined or selectable time frames to follow up-e.g., one week, one month, etc. Or, a participant may select a desired time and date for the next session. Once participants and a potential time for the future session are identified, the application or the scheduling participant sends each invited participant an invitation to the next session, which may be accepted, rejected, tentatively rejected, tentatively accepted, and/or which allows a participant to propose an alternative time and/or date. If the participant receiving the invitation is running the collaborative communication application as described herein, the invitation may be accepted, rejected, or a new time proposed within the application running on the participant's device. The default participant list may be the list of participants on the current collaboration session. Participants can be deleted and/or added to the list.

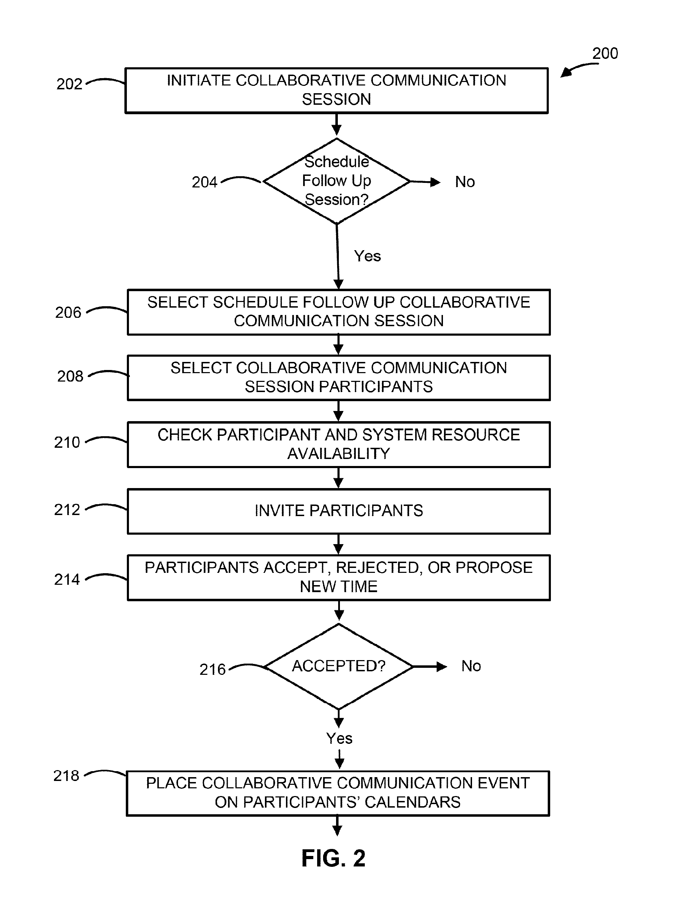

FIG. 2 illustrates a method 200 of scheduling a collaborative communication session in accordance with embodiments of the invention.

Method 200 includes the steps of initiating a collaborative communication session (step 202), determining whether to schedule a follow-up session (step 204), selecting schedule communication session (step 206), selecting communication session participants (step 208), checking participant and system resource availability (step 210), inviting participants to a future session (step 212), accepting, rejecting or proposing a new time (step 214), determining whether invitation was accepted (step 216), and placing the collaborative communication event on participants' calendars.

During step 202, a collaborative communication session between two or more participants is initiated. The session may be an ad hoc or scheduled session in the form of any combination of a chat, audio communication, video communication, and web collaboration.

During step 204, one or more participants determine whether to schedule a follow-up collaborative communication session. If no participant determines to schedule a follow-up session, then method 200 terminates. If, on the other hand, one or more participates decide to schedule a follow-up session, method 200 continues to step 206.

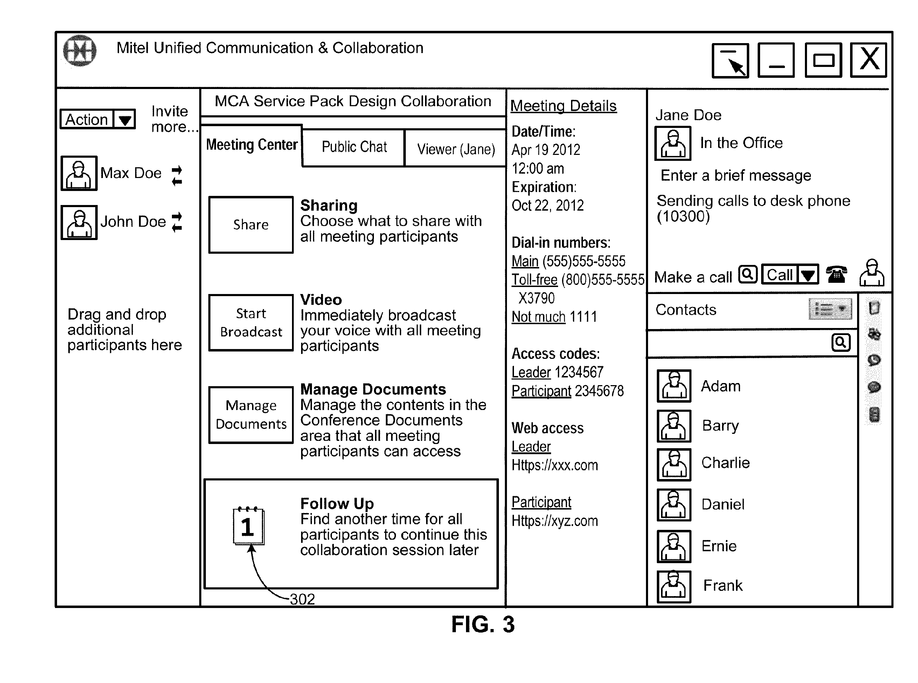

A participant may elect to schedule a follow-up communication session by selecting a feature (e.g., by selecting a button-see, e.g., button 302 in FIG. 3) in a communication collaboration application (e.g., a UCC application). In this case, the participant does not need to leave the communication application to schedule the future session. In accordance with various aspects of the disclosure, the ability to schedule a follow up communication session may be limited to a session leader or otherwise restricted to a subset of the participants.

During this step, the application enters all participants' names and schedules into the calendar feature of the application, or the participants schedules are entered into a participant's calendar (e.g., an enterprise calendar) using a plug-in or widget. A participant may also select a desired timeframe for the follow-up session-e.g., one day, two days, one week, two weeks, or the like, using, for example, a pop-up window provided by the application. The application may default to a specific timeframe-e.g., one week, one month, or the like. In accordance with exemplary aspects, the application is configured to default to proposing business hours for follow-up meetings.

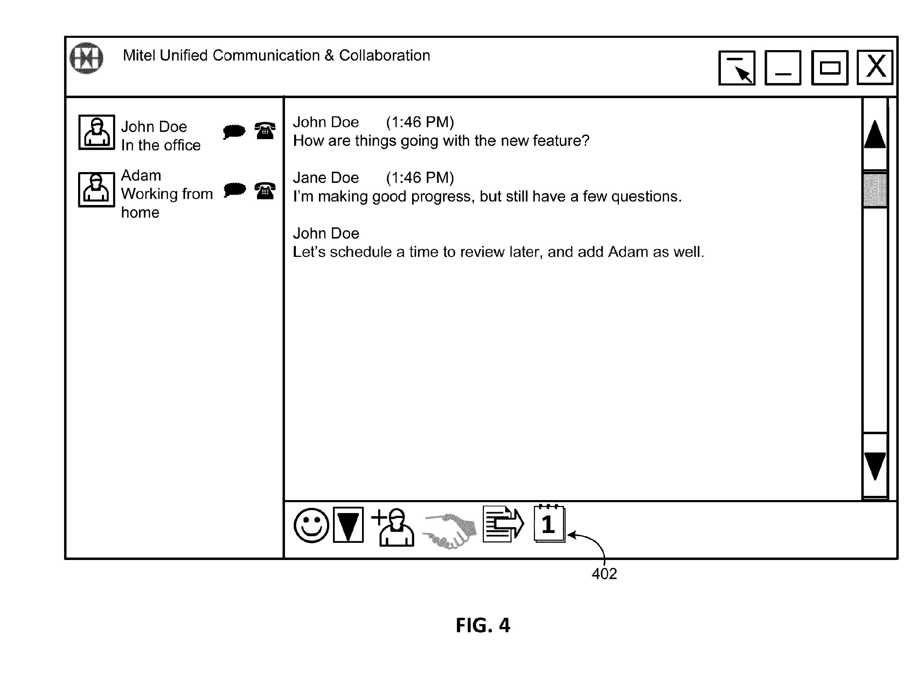

FIG. 3 and FIG. 4 illustrate a collaborative communication application including or integrated with the calendaring feature described herein. In particular, FIG. 3 illustrates a UCC session with an application that facilitates future communication with participants and FIG. 4 illustrates a chat session with an application that facilitates future communication with participants. In accordance with exemplary aspects, when a participant selects the "Follow Up" or a calendar button, respectfully illustrated as 302 and 402 in Fig. 3 and Fig. 4, in the application, all participants are entered into the scheduling participant's calendar application (e.g., an enterprise calendar system integrated with the collaborative communication application) or into a calendaring feature of the application.

Once a participant has instructed the collaborative communication application that a follow-up session is desired and (optionally) a desired follow-up time (e.g., one day, one week, one month, or the like) is selected-e.g., selected by a participant (e.g., a leader) or automatically selected by the application, the participant requesting the follow-up session with one or more participants (e.g., each of the participants to the session) or another participant can select the list of participants for the future session. In accordance with one example, a default list of participants for the future session is the list of the participants on the session of step 202. Alternatively, the default list includes all participants invited to the current session, regardless of whether the each individual participant participates in the current session. In accordance with another example, the default list of participants may be a predefined group, such as managers or the like, or the default group may include or may not include "optional" participants-i.e., the default may include only "required" participants or "required" and "optional" participants.

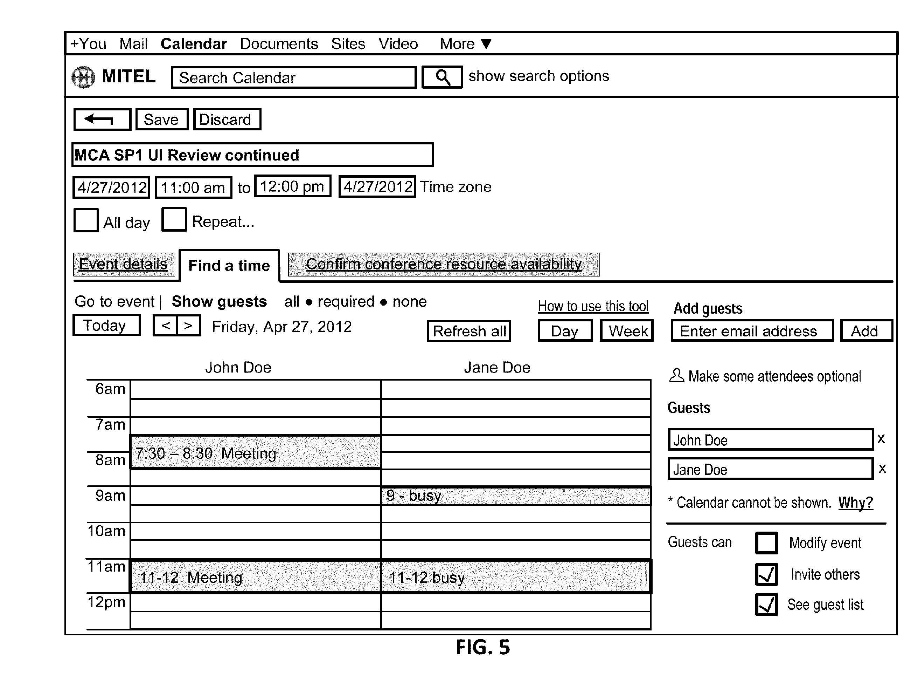

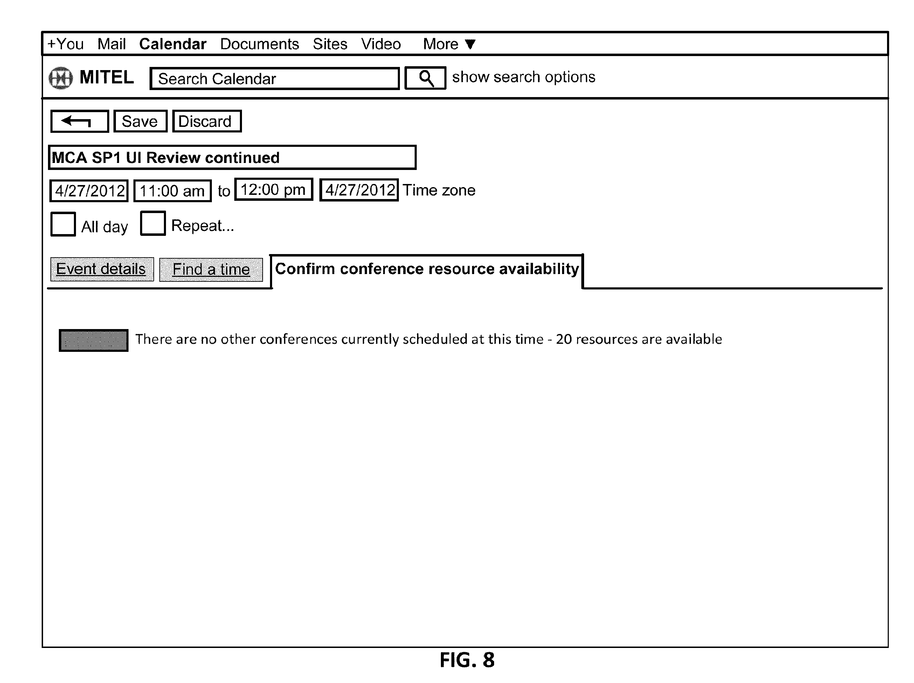

Once the participants for the future session are selected, the communication application or a calendar application with a suitable widget or plug-in to communicate with the communication application determines whether the participants and the desired system resources or features of the communication system (e.g., ports of a UCC server) for the next session (e.g., voice, video, chat, web, or combinations thereof) are available for the follow-up session. For example, if a desired timeframe and feature are selected, the communication application or a calendar application determines whether each participant and resource/feature is available. The application may be set up to look at the next available time after the selected timeframe, or plus or minus a certain amount of time (e.g., one day, four hours, one hour, or the like) on either side of the selected timeframe. FIG. 5 illustrates a calendar application (e.g., an enterprise calendar application) which opens and is populated, e.g., via a widget or a plug in via the collaborative communication application. Participants may be added or removed from the invitation to the session, and the availability of participants and communication resources can be viewed in the application (calendar or collaborative communication application). Fig. 8 illustrates an exemplary screen, when a participant selects the "confirm conference resource availability" tab.

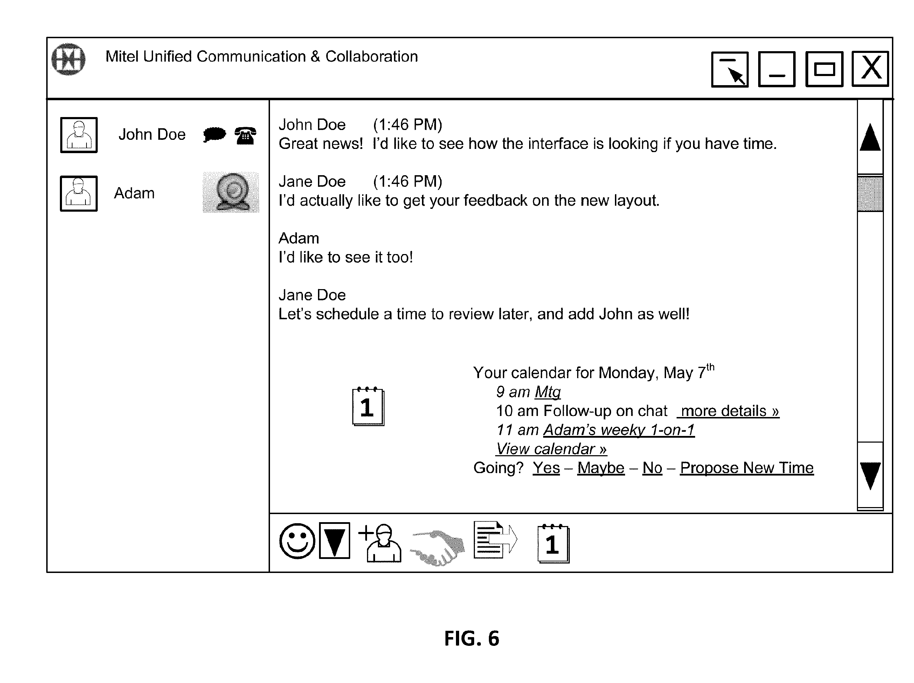

FIG. 6 illustrates a collaborative communication (chat) application with an integrated calendar. In the illustrated case, each user can view their calendar from within the collaborative communication application, and can accept, reject, propose a new time, or tentatively accept or reject the invitation to a future session.

If it is determined that suitable participants and communication resources/features are available for the future session at a determined timeframe, then the desired participants are invited to join the future session during step 212. An invitation to participants may be sent via, for example, email or chat, or may be displayed within the collaborative communication application, and the invitation may include all information required to join the future session.

During step 214, participants of the desired future communication session (which may include some or all of the participants of the session of method 200), accept, reject, tentatively accept, tentatively reject, or propose an alternative time for the future session. For the participants participating in the current session (of method 200), those participants can accept, reject, or propose a new session time directly from the communication application or, if used, the enterprise calendar application. For participants of the future session, which are not participants of the session of method 200, those future session participants may receive an invitation-e.g., via email, chat, text, or similar communication.

Once a participant or future participant accepts the invitation to a future communication session, the information (e.g., time, date) are entered onto the participant's electronic calendar (e.g., part of collaborative communication application or an enterprise calendar) during step 218. Alternatively, step 218 may include providing information to the participants about how to join the future session or providing a link to add the future session to the participants' calendars.

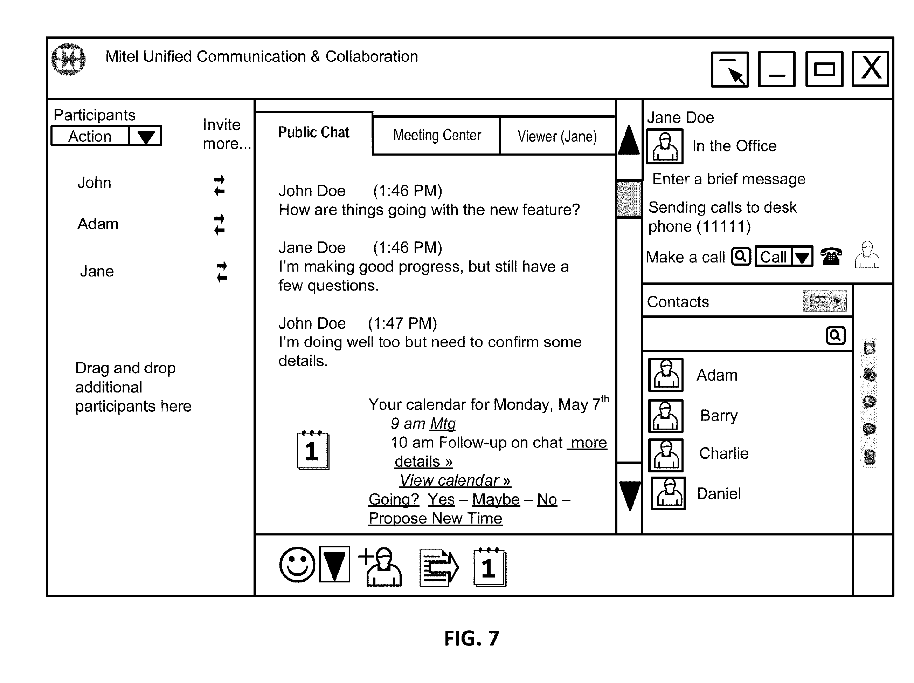

FIG. 7 illustrates a collaborative communication session, in accordance with various embodiments, after a participant has scheduled a session using a calendar feature. In the illustrated example, other participants to a collaborative communication session can click a link to quickly add the future date to their calendars.

Aspects of the present invention have been described above with reference to a number of exemplary embodiments and examples. It should be appreciated that the particular embodiments shown and described herein are merely illustrative and are not intended to limit in any way the scope of the invention as set forth in the claims. It will be recognized that changes and modifications may be made to the exemplary embodiments without departing from the scope of the present invention. These and other changes or modifications are intended to be included within the scope of the present invention, as expressed in the following claims.

## Claims

1. A collaborative communication system comprising:
a server;
a first device coupled to the server, the first device comprising a collaborative communication application; and
a second device coupled to the server;
wherein the collaborative communication application includes an integrated calendar feature, or employs a calendar widget, that checks participants' availability and desired system features' availability and schedules a future session based on the availability of the participants and the desired system features.

2. The collaborative communication system of claim 1, wherein the first device communicates with the second device using one or more of: chat, audio communication, video communication, and web collaboration.

3. The collaborative communication system of claim 1 or 2, wherein the collaborative communication application comprises a Unified Communication and Collaboration application.

4. The collaborative communication system of any preceding claim, further comprising a calendar application server.

5. The collaborative communication system of any preceding claim, wherein the collaborative communication application automatically enters participants' name and calendar information into a calendar feature of the collaborative communication application.

6. The collaborative communication system of any preceding claim, wherein the collaborative communication application allows participants to select: accept, reject, or propose new time in response to an invitation to a future session.

7. The collaborative communication system of any preceding claim, wherein the collaborative communication application automatically proposes a follow-up meeting time based on desired times of a session, availability of participants, availability of the collaborative communication resources or desired features, and predefined or selectable time frames to follow up.

8. The collaborative communication system of any preceding claim, wherein the collaborative communication application allows a participant to select a preferred time and date for a follow-up meeting; and/or
wherein the collaborative communication application sends invitations to desired participants for the future session; and/or
wherein a default participants list for a future session is a list of participants of a current session.

9. A method of scheduling a collaborative communication session, the method comprising the steps of:
initiating a collaborative communication session between two or more participants;
selecting schedule a communication session using a collaborative communication application that includes an integrated calendar feature or that employs a calendar widget;
selecting communication session participants;
checking participant availability using the calendar feature or the calendar widget;
checking desired collaborative communication system features availability using the calendar feature or the calendar widget; and
sending an invitation to desired participants to participate in a future session.

10. The method of scheduling a collaborative communication session of claim 9, further comprising the step of accepting, rejecting, or proposing an alternative session time using the collaborative communication application.

11. The method of scheduling a collaborative communication session of claim 9 or 10, further comprising one or more of the steps of: placing a scheduled session time and date on the participants' calendars, providing information to the participants about how to join the future session, and providing a link to add the future session to the participants' calendars.

12. The method of scheduling a collaborative communication session of any of claims 9 to 11, wherein the step of initiating a collaborative communication session between two or more participants comprises:
initiating a communication session selected from the group consisting of chat, audio communication, video communication, and web collaboration; and/or
automatically entering participants' names and schedules into the calendar feature; and/or
automatically entering participants' schedules into an enterprise calendar application.

13. The method of scheduling a collaborative communication session of any of claims 9 to 12, further comprising the step of selecting a preferred timeframe for the future session.

14. The method of scheduling a collaborative communication session of any of claims 9 to 13, wherein the collaborative communication application automatically selects a default list of participants for the future session based upon participants of a current session.

15. The method of scheduling a collaborative communication session of any of claims 9 to 14, wherein one or more participants' calendar information is displayed within the collaborative communication application.
